# EUROPEAN PATENT APPLICATION

(11) **EP 1 657 315 A1**
(43) Date of publication of application: **17.05.2006**
(21) Application number: 05445086.1
(22) Date of filing: 08.11.2005
(51) Int. Cl.: C21D 7/06, B23B 51/04, C21D 9/22, B23P 15/28

(54) **A cutting tool for metalworking as well as a method in the production of a cutting tool**

(30) Priority: 10.11.2004 SE 0402760
(71) Applicant: Sandvik Intellectual Property AB, 811 81 Sandviken (SE)
(72) Inventor: Tübinger, Klas, 811 71 Järbo (SE); Lundgren, Roger, 747 42 Gimo (SE); Höglund, Dan, 747 42 Gimo (SE)

(57) **Abstract**

According to the invention, there is provided a cutting tool and a method in the production of a cutting tool for metalworking that results in a holder body having increased fatigue strength at loads over 60 % of the yield point in tension. The method and the tool are characterized in that the holder body of the tool is subjected to a hardening process resulting in deep hardening, and that the holder body then is subjected to a surface treatment resulting in a strain hardening of the surface in order to introduce compressive stresses in the surface zone of the holder body.

## Description

### Technical Field of the Invention

The present invention relates to a type of cutting tool for metalworking as well as a method in the production of a cutting tool, such as holder bodies having one or more insert seats for indexable inserts. As examples of such tools, drills may be mentioned having a plurality of cutting inserts of cemented carbide, cermets or ceramics.

### Background of the Invention and Prior Art

Cutting tools for chip-removing machining in, for instance, metallic materials are available in many different types, comprising tools for drilling, milling and turning. Common to these tools is that they usually comprise a holder body as well as one or more cutting inserts received in insert seats in the holder body intended therefore. Usually, the holder body is manufactured from hardened steel and subsequently cold blackened to obtain a black surface and the cutting inserts from cemented carbide, cermets or ceramics

The load, static and dynamic, on tools for cutting machining in metallic materials has become higher and higher. The increased load emanates from more efficient cutting inserts and that the holder bodies have become increasingly optimised in the geometrical design thereof. An area of the holder bodies particularly subjected to load is the area in and adjacent to the insert seats. This is naturally due to the fact that the load during machining is carried by the cutting inserts mounted in the insert seats. Thus, there is a growing need to increase the fatigue strength of such holder bodies, and particularly in and adjacent to the insert seats.

A method to increase the fatigue strength of a material is to introduce compressive stresses in the surface zone. For instance, compressive stresses may be introduced to a material in the surface zone by surface hardening of the material, e.g. by nitriding, wherein nitrogen is supplied to the surface of the holder body, usually steel, in a gas atmosphere, essentially at a temperature of 510-550 °C. Another way is to subject the material to nitro-carburizing, wherein carbon and nitrogen are supplied to the surface in a gas atmosphere, normally at a temperature of about 570 °C. Still another way is to subject the material to an ion nitration, wherein nitrogen is supplied to the surface in an ionizing gas, essentially under vacuum, at a temperature of about 450-650 °C.

Still another method to increase the fatigue strength of the material by introducing compressive stresses in the surface zone is shot peening. The idea of the method is to bombard, under accurately controlled conditions, the surface with small particles of, for instance, steel, glass or ceramics.

US 2005/0002744 discloses a cutting tool and a method for the production of cutting tools for metalworking characterized in that the holder body of the tool first is submitted to a surface hardening that results in the formation of compressive stresses in the surface and then submitted to a surface treatment that gives additional contribution of compressive stresses in the surface. In this way, it is allowed to, on one hand, be able to modify/machine or remove parts of or the entire phase-transition layer obtained in the surface hardening at the same time as additional compressive stresses are built up in the surface. However, it has turned out that this method does not result in satisfying fatigue strength of the holder body at exceptionally high loads, such as greater than 60 % of the yield point in tension of the material.

### Objects of the Invention

The primary object of the present invention is to provide a holder body having improved fatigue strength at high loads.

Another object of the present invention is to provide a holder body having low risk of crack formation.

Still another object of the present invention is to provide a holder body that is simple and inexpensive to manufacture.

An additional object of the present invention is to provide a holder body having a long service life at high loads.

At least the primary object of the present invention is realised by means of a method and a cutting tool having the features defined in the subsequent independent claims. Preferred embodiments of the invention are defined in the dependent claims.

### Brief Description of the Drawings

Below, a detailed description of embodiments of the invention given as examples follows, reference being made to the appended drawings, where:
- Fig. 1-2: show two side views of a drill shank of a typical tool body according to the invention, more precisely in the form of a holder body for so-called short hole drills.
- Fig. 3: shows a view obliquely from the front of a drill provided with cutting inserts.

In the figures the following reference numbers are used:11 drill shank; 12,13 insert seats; 14,15 chip channels; 16 tangential support surface; 17 axial support surface; 18 radial support surface; 19 additional space; 20 opposite surface; 21 section transition.

### Detailed Description of Preferred Embodiments of the Present Invention

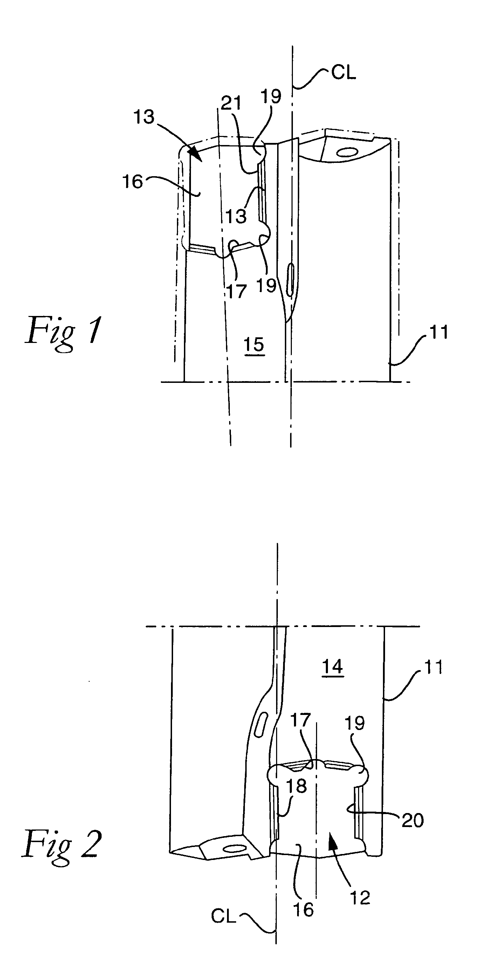

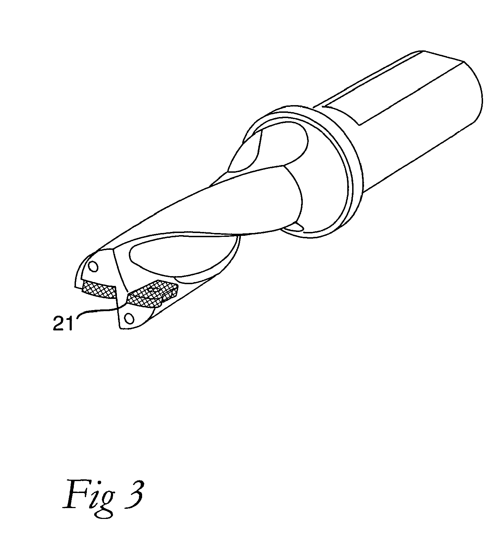

Figs. 1-3 show a cylindrical drill shank 11, which at the front part thereof is provided with two insert seats 12 and 13 placed on both sides of the centre line CL of the drill. Axial recesses or channels formed for the chip transport are designated 14 and 15. The two insert seats 12, 13 are provided with holes in the centre for the receipt of locking screws (not shown) for the locking of cutting inserts in the seats. Each insert seat comprises a tangential support surface 16, an axial support surface 17 as well as a radial support surface 18. The support surfaces are provided with additional spaces 19 in order to accommodate the corners of the cutting insert in order to avoid damage thereof. The tangential support surfaces 16 are substantially parallel to radial planes through the centre line CL. Each axial support surface 17 is broken so that it forms a substantially V-shaped profile, the tip of which is directed axially rearward toward the fixing part of the shank. A surface 20 positioned in the centre seat 12 and opposite the radial support surface 18 has no supporting function of the cutting insert but only aims to prevent wedging of chips between the shank and the centre cutting insert. The section transition between the radial support surface 18 and the tangential support surface 16 is designated 21. At this section transition 21, upon full engagement with a work piece, the maximal stress concentration in the insert seat arises. Therefore, it is desirable to be able to improve the fatigue strength and, as far as possible, reduce the risk of crack initiation and propagation.

According to the invention, a tool holder from tool steel is depth-hardened, i.e., so that basic structure of the steel is dominated by martensite, having a hardness of at least 40 HRC substantially all through the cross section of the holder. This applies to holder bodies for a drill. Holders for milling or turning operations may have a hardness of at least 36 HRC measured at the surface thereof. This can, for instance, be achieved by heating the tool followed by quenching as known in the art. Depending on the holder material, quenching may be effected by media such as air, oil or water. The high hardness means that the effect of a later cold working in comparison with cold working of softer materials increases by virtue of the increased dislocation density and pile-up, which gives higher residual stresses.

After that, a surface treatment takes place, resulting in strain hardening of the surface, by a cold working with the purpose of introducing compressive stresses in the surface zone of the holder body. With the surface zone we mean 10-160 µm below the surface. This may be carried out by means of, for instance, shot peening. Preferably, this shot peening is made at least in and adjacent to the insert seats. In order to obtain a high residual-stress value, it is required that the holder body is shot peened using correct intensity. The intensity is determined by the choice of hardness, density and size of shot peening media, as well as the choice of pressure, flow, angle of incidence, rotation and time for the shot-peening process. The following conditions have been found suitable:
Pressure: 1-7 bar
Flow: 0.3-1.0 kg/min
Angle of incidence: 90° deg
Tool rotation: 25-50 rev/m
Time: 15-90 s
Hardness of media: 45-55 HRC
Density: 7-8 g/cm³
Size: diameter 0.25-0.50 mm

At correct intensity, which suitably is at least 7A, preferably at least 15A, most preferably at least 18A where A means the Almen-value determined substantially as disclosed in US 2350440, compressive stresses are built into the steel and the fatigue strength increases. By means of a well-balanced shot peening, the surface is affected in two additional ways. Firstly, the surface structure becomes favourable from a fatigue strength point of view, since machining scratches are removed and a random fine-pitted structure is obtained. This means that cracks have more difficulty to propagate in a certain direction. Secondly, the surface obtains an attractive finish.

Alternatively the surface treatment resulting in strain hardening can be carried out by other cold working operations as known in the art, such as indentation or roller burnishing, whereby a certain plastic deformation of the surface of the holder body is achieved, resulting in compressive stresses being introduced to the surface zone of the holder body. Preferably, the cold working operation is performed in such a way that a surface structure favourable from a fatigue strength point of view is also achieved.

Independently of which type of surface treatment that has been selected, it is preferred that the surface treatment is carried out at the most exposed areas, i.e., for instance, in and adjacent to the insert seats. Generally at least a part of the holder body is subjected to a hardening process resulting in deep hardening, and that at least a portion of this part of the holder then is subjected to a surface treatment in order to introduce compressive stresses to the surface zone of the holder body. Alternatively both the hardening process and the surface treatment are carried out over the entire holder body.

According to the invention, a holder body with surprisingly improved fatigue strength is obtained in comparison with prior art holder bodies, above all at loads over 60 % of the yield point in tension where, e.g., nitro-carburized holder bodies encounter problems with initial cracks. The risk of crack initiation and crack propagation at high loads may be substantially reduced, on one hand in and adjacent to the insert seats, and on the other hand at portions axially behind the insert seats of the holder body.

### Feasible Modifications of the Invention

In the embodiment described above, the holder body is in the form of a rotatable drill. However, the concept of the invention is general and can be used in other types of tools for chip-removing machining, such as turning tools and milling tools.

### Example 1

An indexable short hole drill, according to the invention were prepared to final shape and dimension from tool steel SS2242. They were depth-hardened by heating to 960°C followed by quenching in air to having a yield point in tension of 1520 N/mm² and a hardness of 50 HRC. After that the tools were shot peened over the entire holder body under the following conditions:
Angle of incidence: 90 deg relative the longitudinal axis of the drill
Distance between nozzle and tool holder: 100 mm
Speed of rotation, holder body: 30 rev/min
Time: 60 s
Media: 52 HRC, round steel spheres, 0.20 mm
Pressure and flow were adjusted to reach Almen-value of 18A.

### Example 2

Example 1 was repeated and additional to the hardening was nitrocarburising treatment undertaken as disclosed in of US 2005/0002744.

### Example 3

The tool holders from Examples 1 and 2 provided with cemented carbide cutting inserts were tested in short hole drilling operation 60 mm deep. Holes were drilled in material SS2541 300 HB with cutting data of speed of 200 m/min and feed of 0.20 mm/rev. These cutting data result in a force of 85% of the material yield tension. As a further reference a commercially available depth-hardened and cold blackened drill of the same type was tested. Tool life criterion was breakage of tool holder.

**Result:**

| Reference | 300 m |
|---|---|
| Example 2 | 50 m |
| Example 1 | >1000 m |

## Claims

1. Method in the production of a cutting tool for metalworking, comprising a holder body having one or more insert seats intended to receive a cutting insert each of a hard material, such as cemented carbide, cermets or ceramics, the holder body of the tool being manufactured from steel, **characterized in** the combination of the following steps:
- deep hardening of at least a part of the holder body and then
- surface treating at least a portion of this part of the holder body in order to introduce compressive stresses in the surface zone of the holder body.

2. Method according to any one of the preceding claims,
**characterized in**
- deep hardening the entire holder body.

3. Method according to any one of the preceding claims,
**characterized in**
- surface treating in and adjacent to the insert seats.

4. Method according to any one of the preceding claims,
**characterized in**
- surface treating the entire holder body.

5. Method according to any one of the preceding claims,
**characterized in**
- surface treating by shot peening.

6. Cutting tool for metalworking, comprising a holder body (11) having one or more insert seats (12,13) intended to receive a cutting insert each of a hard material, such as cemented carbide, cermets or ceramics, the holder body (11) being manufactured from steel, **characterized in that** at least a part of the holder body is depth hardened, and that at least a portion of this part of the holder body furthermore has a strain hardened surface.

7. Cutting tool according to claim 6, **characterized in that** the holder body is a part of a drill having a hardness of at least 40 HRC, preferably all through the cross section thereof.

8. Cutting tool according to claim 6, **characterized in that** the holder body is a part of a tool for milling or turning operations and having a hardness of at least 36 HRC measured at the surface thereof.

9. Cutting tool according to any one of claims 6-8, **characterized in that** the surface has a random fine-pitted structure, preferably as a result of shot peening.

10. Cutting tool according to claim 9, **characterized in** the surface has a random fine-pitted structure over the entire holder body.

11. Cutting tool according to claim 9, **characterized in that** the random fine-pitted structure is present in and adjacent to the insert seats.
